# EUROPEAN PATENT APPLICATION

(11) **EP 4 671 309 A1**
(43) Date of publication of application: **31.12.2025**
(21) Application number: 23924226.6
(22) Date of filing: 15.12.2023
(51) Int. Cl.: C08G 77/20, C08G 77/08, C08G 77/16

(54) **ORGANOPOLYSILOXANE COMPOUND, DERIVATIVE OF SAME, METHOD FOR PRODUCING SAID ORGANOPOLYSILOXANE COMPOUND AND METHOD FOR PRODUCING SAID DERIVATIVE**

(30) Priority: 21.02.2023 JP 2023025076
(71) Applicant: JNC Corporation, Chiyoda-ku Tokyo 100-8105 (JP)
(72) Inventor: KOSUGI, Misa, Ichihara-shi, Chiba 290-8551 (JP); TANAKA, Shugo, Ichihara-shi, Chiba 290-8551 (JP)
(74) Representative: Becker, Eberhard
(86) International application number: PCT/JP2023/044954
(87) International publication number: WO 2024/176582

(57) **Abstract**

The present invention addresses the problem of providing: an organopolysiloxane compound which has different functional groups at both ends and is suitable for use as an additive for curable silicone rubber compositions or organic resins; and a method for producing this organopolysiloxane compound.

The problem can be solved by an organopolysiloxane compound which is represented by formula (1). The organopolysiloxane compound represented by formula (1) is characterized by having a vinyl group at one end and having a hydroxy group at the other end.

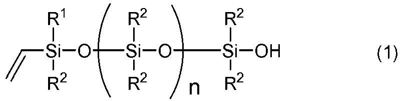

In formula (1), R¹ represents an alkyl group having 4 or more carbon atoms, each R² independently represents an alkyl group or an aryl group, and n represents 0 or an integer of 1 or more.

## Description

### Technical Field

The invention relates to an organopolysiloxane compound having different kinds of functional groups at both ends, a derivative thereof, a method for producing the organopolysiloxane compound, and a method for producing the derivative thereof.

### Related Art

Organopolysiloxane compounds are not only useful as a raw material for a curable silicone rubber composition widely used in building materials, daily necessities, medical devices, electronic materials, and the like, but also, by being used as an additive to an organic resin, organopolysiloxane compounds can impart properties such as flexibility, water repellency, mold release properties, weather resistance, heat resistance, and electrical insulation properties, which excel due to the structure of the organopolysiloxane compounds, to the organic resin, and therefore has high utility value.

In general, as the organopolysiloxane compounds used in curable silicone rubber compositions, examples may include organopolysiloxane compounds having the same functional group at both ends or side chains and organopolysiloxane compounds having a functional group only at one end. Comparatively, organopolysiloxane compounds having different functional groups at both ends (hereinafter referred to as organopolysiloxane compounds having terminal different functional groups) are hardly known, and there are few examples of use as an additive to a curable silicone rubber composition and an organic resin.

### Citation List

### Patent Literature

[Patent Document 1] Japanese Laid-open No. 2016-3317

### [Non-Patent Document]

[Non-Patent Document 1] Macromolecules 2003, 36, 3890-3897

### SUMMARY OF INVENTION

### Technical Problem

An issue of the invention is to provide: an organopolysiloxane compound which has different functional groups at both ends and is suitable for use as an additive for curable silicone rubber compositions or organic resins; a method for producing this organopolysiloxane compound; and a method for producing the derivative thereof.

Another objective of the invention is to provide an organopolysiloxane compound, a derivative thereof, and a method for producing the organopolysiloxane compound, and a method for producing the derivative thereof. The organopolysiloxane compound has a narrow molecular weight distribution, i.e., being able to reduce low-reactivity polymer components and low-molecular components that cannot contribute to reaction, thus being able to suppress variation in reaction rate at the time of introducing various substituents or when introducing to various polymers using the functional groups at each end.

### Solution to Problem

The problem can be solved by an organopolysiloxane compound which is represented by formula (1). The organopolysiloxane compound represented by formula (1) is characterized by having a vinyl group at one end and having a hydroxy group at the other end.

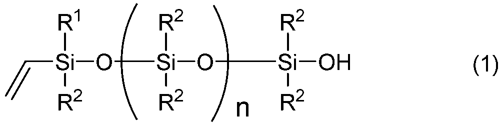

In formula (1), R¹ represents an alkyl group having 4 or more carbon atoms, each R² independently represents an alkyl group or an aryl group, and n represents 0 or an integer of 1 or more.

By using a production method including: a step of reacting an alkyl lithium compound with trivinyltrimethylcyclotrisiloxane to generate lithium vinylalkylmethylsilanolate; then, a step of reacting with cyclotrisiloxane; and a step of terminating the reaction with an acid, it is possible to produce the organopolysiloxane compound represented by formula (1) with a narrow molecular weight distribution.

The invention includes configurations as follows.
[1] An organopolysiloxane compound, represented by formula (1) as follows: 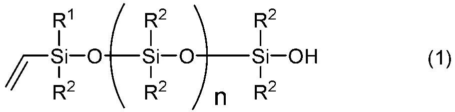 (wherein in formula (1), R¹ represents an alkyl group having 4 or more carbon atoms, each R² independently represents an alkyl group or an aryl group, and n represents 0 or an integer of 1 or more.)
[2] In the organopolysiloxane compound according to [1], a molecular weight distribution (Mw/Mn) is 1.80 or less.
[3] A method for producing the organopolysiloxane compound according to [1] or [2] includes: a step of reacting an alkyl lithium compound with trivinyltrimethylcyclotrisiloxane to generate lithium vinylalkylmethylsilanolate; then, a step of reacting with cyclotrisiloxane; and a step of terminating reaction with an acid.
[4] In an organopolysiloxane derivative derived from the organopolysiloxane compound according to [1] or [2], the organopolysiloxane derivative has different functional groups at both ends.
[5] A method for producing an organopolysiloxane derivative is provided. The organopolysiloxane derivative has different functional groups at both ends by using, as a raw material or a reaction intermediate, the organopolysiloxane compound according to [1] or [2].
[6] An organopolysiloxane derivative has different functional groups at both ends and is obtained by reacting the organopolysiloxane compound according to [1] or [2] with a silane compound having an alkoxysilyl group, a chloro group, or a silanol group.
[7] A method for producing an organopolysiloxane derivative is provided. The organopolysiloxane derivative has different functional groups at both ends and are obtained by reacting the organopolysiloxane compound according to [1] or [2] with a silane compound having an alkoxysilyl group, a chloro group, or a silanol group.

### Inventive effects

The organopolysiloxane compound represented by formula (1) of the invention can be applied to curable silicone rubber compositions. The organopolysiloxane compound enables a composition design where one of the functional groups can be used to react with another silicone material or hydrocarbon material to obtain an elastomer or a prepolymer, and the other functional group is used for curing the composition. Additionally, the organopolysiloxane compound of the invention, as a compound having functional groups with different reactivities at respective ends, can be applied as an additive in a silicone composition or an organic resin composition. Furthermore, the organopolysiloxane compound represented by formula (1) allows selective introduction of various functional groups to one functional group, and also allows selective introduction of various functional groups to the other functional group. Thus, the organopolysiloxane compound can be used as an intermediate to obtain various organopolysiloxane derivatives having different types of functional groups at both ends (hereinafter referred to as organopolysiloxane derivatives having different functional groups at both ends). The organopolysiloxane derivative having different functional groups at both ends and obtained from the organopolysiloxane compound represented by formula (1) can also be applied to a curable silicone rubber composition or as an additive of a silicone composition or an organic resin composition.

In addition, the organopolysiloxane compound represented by formula (1) obtained by the production method of the invention has a narrow molecular weight distribution. Therefore, the variation in reaction rate can be suppressed by reducing low-reactivity polymer components and low-molecular components that cannot contribute to reaction.

### DESCRIPTION OF EMBODIMENTS

The following describes embodiments of the invention, but the invention is not limited to these embodiments.

An organopolysiloxane compound of the invention is represented by formula (1) as follows and is characterized by having a vinyl group at one end and a hydroxyl group at the other end.

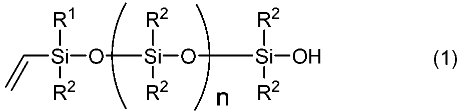

In formula (1), R¹ is an alkyl group having 4 or more carbon atoms, and specific examples include an n-butyl (normal butyl) group and a t-butyl (tertiary butyl) group. R² is each independently an alkyl group or an aryl group, preferably a methyl group or a phenyl group, and more preferably a methyl group. n is 0 or an integer of 1 or more, preferably an integer of 1 to 200, and more preferably an integer of 15 to 200.

The organopolysiloxane compound represented by formula (1) can be produced by the following method.

A method includes: a step of reacting an alkyl lithium compound with trivinyltrimethylcyclotrisiloxane to generate lithium vinylalkylmethylsilanolate; then, a step of reacting with cyclotrisiloxane; and a step of terminating the reaction with an acid.

Examples of alkyllithium include n-butyllithium and t-butyllithium, where n-butyllithium is preferred for safety in handling. Examples of cyclotrisiloxane include hexamethylcyclotrisiloxane, triphenyltrimethylcyclotrisiloxane, and hexaphenylcyclotrisiloxane, where hexamethylcyclotrisiloxane is particularly preferred. The acid is not particularly limited as long as it is a Brønsted acid, but examples include acetic acid, formic acid, nitric acid, sulfuric acid, and hydrochloric acid, where acetic acid is particularly preferred.

In the step of generating lithium vinylalkylmethylsilanolate, the reaction temperature is 0°C to 50°C, preferably 20°C to 40°C, and the reaction time is 0.1 hours to 6 hours, preferably 0.1 hours to 2 hours. In the step of reacting with cyclotrisiloxane, the reaction temperature is 0°C to 20°C, and the reaction time is 1 hour to 6 hours. In the step of terminating the reaction with an acid, the reaction temperature is 0°C to 30°C, and the reaction time is 0.1 hours to 20 hours.

The organopolysiloxane compound represented by formula (1) and obtained by the production method of the invention has a narrow molecular weight distribution. Therefore, the variation in reaction rate can be suppressed by reducing low-reactivity polymer components and low-molecular components that cannot contribute to reaction. The molecular weight distribution (Mw/Mn) of the organopolysiloxane compound represented by formula (1) is preferably 1.8 or less, and more preferably 1.3 or less.

The organopolysiloxane compound represented by formula (1) can be used as a raw material for a curable silicone rubber composition or as an additive for an organic resin. In addition to imparting properties such as flexibility, water repellency, release properties, and weather resistance due to the structure of the organopolysiloxane compound, since the organopolysiloxane compound represented by formula (1) has an alkyl group with 4 or more carbon atoms as R¹, the compatibility is expected to improve in a composition combined with other organic compounds.

The organopolysiloxane compound represented by formula (1) can be used to produce various organopolysiloxane derivatives having different functional groups at both ends that are different from formula (1). By reacting the vinyl group or hydroxyl group of formula (1) with compounds having various functional groups, various organopolysiloxane derivatives having different functional groups at both ends can be produced. It may also be that, after reacting the vinyl group or hydroxyl group, the group at the other end is reacted to produce an organopolysiloxane derivative having different functional groups at both ends. The organopolysiloxane derivative having different functional groups at both ends and obtained from formula (1) also have the properties of a narrow molecular weight distribution, similar to the organopolysiloxane compound represented by formula (1).

Examples of functional groups in the organopolysiloxane derivative having different functional groups at both ends include an acrylic group, a methacrylic group, a glycidyl group, an amino group, an isocyanate group, an fluoroalkyl group, a mercapto group, an alkyl group, an aryl group, an olefinyl group, a SiH group, and an alkoxysilyl group.

Compounds that react with the vinyl group of the organopolysiloxane compound represented by formula (1) include compounds having various functional groups and further having an SiH group.

The organopolysiloxane compound represented by formula (1) can be subjected to a hydrosilylation reaction with compounds having various functional groups and further having an SiH group to introduce functional groups such as an alkoxyl group or an acrylic group to the vinyl group of formula (1). It is preferable to perform the reaction in the presence of a catalyst. The catalyst can be selected from those normally used as a catalyst for hydrosilylation reaction. Examples of the catalyst include platinum catalysts such as chloroplatinic acid and platinum complexes of divinyltetramethyldisiloxane. The platinum catalyst may be added to the reaction solution in the state of a solution containing a solvent such as xylene. The reaction can be carried out in a reaction solution with or without a solvent. The reaction temperature and the reaction time are adjusted so that the hydrosilylation reaction proceeds sufficiently. For example, the reaction temperature may be -20°C to 180°C, or 80°C to 130°C. The reaction time may be 1 hour to 24 hours, or 1 hour to 3 hours.

Examples of compounds that react with the hydroxyl group of the organopolysiloxane compound represented by formula (1) include silane compounds having various functional groups and further having an alkoxysilyl group, silane compounds having various functional groups and further having a chloro group, and silane compounds having various functional groups and further having a silanol group. Specifically, examples include tetraalkoxysilane, acryloyloxyalkylalkoxysilane, glycidyloxyalkylalkoxysilane, aminoalkylalkoxysilane, alkylalkoxysilane, arylalkoxysilane, olefinylalkylalkoxysilane, isocyanatealkylalkoxysilane, fluoroalkylalkoxysilane, mercaptoalkylalkoxysilane, chloroalkoxysilane, dialkylchlorosilane, and hydrolysates thereof.

The organopolysiloxane compound represented by formula (1) can be subjected to a condensation reaction with silane compounds having various functional groups and further having an alkoxysilyl group to introduce functional groups such as an acrylic group to the hydroxyl group of formula (1). It is preferable to perform the reaction in the presence of a catalyst, and a lower aliphatic carboxylic acid or a primary amine compound can be suitably used as a catalyst. Specific examples include acetic acid, propionic acid, normal propylamine, isopropylamine, isobutylamine, secondary butylamine, tertiary butylamine, etc., where tertiary butylamine is more preferable.

The organopolysiloxane compound represented by formula (1) can be reacted with various silane compounds in the presence of a basic substance (for example, dehydrochlorination reaction) to introduce a functional group such as an acrylic group to the hydroxyl group of formula (1). Organic bases that can be used as the basic substance for the reaction include trimethylamine, triethylamine, tripropylamine, tributylamine, urea, diazabicycloundecene, diazabicyclononene, imidazole, pyrimidine, pyridine, etc., in which triethylamine is particularly preferable. In addition, solvents commonly used may be used for the reaction. The reaction temperature and reaction time are adjusted so that the reaction proceeds sufficiently, for example, the reaction temperature is 0°C to 80°C, preferably 0°C to 60°C, and the reaction time is 1 hour to 48 hours, preferably 1 hour to 30 hours.

In addition, compounds having various functional groups and further having a SiH group, which are exemplified as compounds that react with a vinyl group, can also be used as compounds that react with a hydroxyl group of formula (1). By subjecting such compound to a dehydrogenation reaction with the organopolysiloxane compound represented by formula (1), a functional group such as an acrylic group can be introduced to the hydroxyl group of formula (1).

### [Examples]

The invention is further described in detail below. The invention is not limited in any way by the examples.

### <Measurement of molecular weight>

The molecular weights of the organopolysiloxane compound and the organopolysiloxane derivative were measured by gel permeation chromatography (GPC), and the ratio between weight average molecular weight (Mw) to number average molecular weight (Mn) was used as the molecular weight distribution (Mw/Mn). Polystyrene was used as a standard sample, and the polystyrene-equivalent molecular weight was measured.

The measurement of polystyrene-equivalent molecular weight by GPC was performed under the following measurement conditions.
a) Measurement instrument: HPLC LC-2000Plus series manufactured by JASCO Corporation
b) Column: two Shodex KF-804
c) Oven temperature: 40°C
d) Eluent: Toluene 0.7 mL/min
e) Standard sample: Polystyrene
f) Injection volume: 20 µL
g) Concentration: 0.05 g/10 mL
h) Sample preparation: The sample was dissolved by stirring at room temperature using toluene as a solvent.

### <Nuclear magnetic resonance (NMR) spectrum>

An NMR measurement device of 500 MHz manufactured by JEOL Ltd. was used. For ¹H-NMR, the measurement sample was dissolved in deuterated chloroform (manufactured by FUJIFILM Wako Pure Chemical Corporation) and measured. For ²⁹Si-NMR, the measurement sample was dissolved in tetrahydrofuran (manufactured by FUJIFILM Wako Pure Chemical Corporation) and measured.

The number of repetitions, namely n, in formula (1) was calculated from the integral values of ¹H-NMR.

### <<Production of the compound represented by formula (1)>>

### <Synthesis Example 1: n=44, R¹=n-butyl, R²=methyl>

A 1L four-neck flask equipped with a stirring rod, a thermometer, and a reflux condenser was charged with 9.6g of 2,4,6-trimethyl-2,4,6-trivinylcyclotrisiloxane and 86.8 g of toluene at room temperature, and then 28.6 g of 2.6 mol/L n-butyllithium was added and stirred for 1 hour. 270.9 g of hexamethylcyclotrisiloxane and 344.4 g of toluene were added to the flask, and 364 g of N,N-dimethylformamide was added at 10°C and allowed to react for 3.5 hours. The polymerization was terminated by adding 13.3 g of acetic acid at 10°C, and stirring was further continued for additional 14 hours.

At room temperature, 150 g of water was added to the flask and stirred for 15 minutes. The mixture was then transferred to a separatory funnel and allowed to stand. After confirming that the mixture had separated into two layers, the lower water layer was extracted from the separatory funnel. The operation of further washing the upper layer with water (200 g) was repeated 8 times. The organic layer remaining in the separatory funnel was transferred to a 500 mL four-neck flask equipped with a stirring rod, a thermometer, a collection flask, and a distillation head. By using a vacuum pump under a reduced pressure condition, the mixture was heated stepwise to 100°C to remove volatile substances remaining in the product, thereby obtaining 248.8 g of a yellow transparent liquid.

GPC: Number average molecular weight (Mn)=4100, Weight average molecular weight (Mw)=4500, Molecular weight distribution (Mw/Mn)=1.10.

¹H-NMR: δ(ppm); 6.11 to 5.69(3H), 2.22(1H), 1.33 to 1.26(6H), 0.87(4H), 0.58(2H), 0.19 to - 0.07(264H).

²⁹Si-NMR: δ(ppm): -1.9, -12.7, -19.3, -19.6 to -20.3.

### <Synthesis Example 2: n=16, R¹=n-butyl, R²=methyl>

A 1L four-neck flask equipped with a stirring rod, a thermometer, and a reflux condenser was charged with 10.4 g of 2,4,6-trimethyl-2,4,6-trivinylcyclotrisiloxane and 85.4 g of toluene at room temperature, and then 31.0 g of 2.6 mol/L n-butyllithium was added and stirred for 1 hour. 80.2 g of hexamethylcyclotrisiloxane and 102.2 g of toluene were added to the flask, and 17.9 g of N,N-dimethylformamide was added at 10°C and allowed to react for 3.5 hours. The polymerization was terminated by adding 14.7 g of acetic acid at 10°C, and stirring was further continued for additional 16 hours.

At room temperature, 150 g of water was added to the flask and stirred for 15 minutes. The mixture was then transferred to a separatory funnel and allowed to stand. After confirming that the mixture had separated into two layers, the lower water layer was extracted from the separatory funnel. The operation of further washing the upper layer with water (120 g) was repeated 8 times. The organic layer remaining in the separatory funnel was transferred to a 500 mL four-neck flask equipped with a stirring rod, a thermometer, a collection flask, and a distillation head. By using a vacuum pump under a reduced pressure condition, the mixture was heated stepwise to 100°C to remove volatile substances remaining in the product, thereby obtaining 76.9 g of a yellow transparent liquid.

GPC: Number average molecular weight (Mn)=1300, Weight average molecular weight (Mw)=2200, Molecular weight distribution (Mw/Mn)=1.69.

¹H-NMR: δ(ppm); 6.13 to 5.70 (3H), 2.30 (1H), 1.33 to 1.27 (6H), 0.87 (4H), 0.59 (2H), 0.24 to - 0.07 (96H).

²⁹Si-NMR: δ(ppm): -2.3, -13.1, -19.7, -19.6 to -20.8.

### <Synthesis Example 3: n=128, R¹=n-butyl, R²=methyl>

A 1L four-neck flask equipped with a stirring rod, a thermometer, and a reflux condenser was charged with 2.9 g of 2,4,6-trimethyl-2,4,6-trivinylcyclotrisiloxane and 85.3 g of toluene at room temperature, and then 8.5 g of 2.6 mol/L n-butyllithium was added and stirred for 1 hour. 280.2 g of hexamethylcyclotrisiloxane and 357.3 g of toluene were added to the flask, and 36.6 g of N,N-dimethylformamide was added at 10°C and allowed to react for 2.5 hours. The polymerization was terminated by adding 4.2 g of acetic acid at 10°C, and stirring was further continued for additional 17 hours.

At room temperature, 170 g of water was added to the flask and stirred for 15 minutes. The mixture was then transferred to a separatory funnel and allowed to stand. After confirming that the mixture had separated into two layers, the lower water layer was extracted from the separatory funnel. The operation of further washing the upper layer with water (120 g) was repeated 8 times.

The organic layer remaining in the separatory funnel was transferred to a 500 mL four-neck flask equipped with a stirring rod, a thermometer, a collection flask, and a distillation head. By using a vacuum pump under a reduced pressure condition, the mixture was heated stepwise to 100°C to remove volatile substances remaining in the product, thereby obtaining 227.4 g of a yellow transparent liquid.

GPC: Number average molecular weight (Mn)=12300, Weight average molecular weight (Mw)=12700, Molecular weight distribution (Mw/Mn)=1.03.

¹H-NMR: δ(ppm); 6.13 to 5.70 (3H), 2.22 (1H), 1.32 to 1.29 (6H), 0.87 (4H), 0.59 (2H), 0.26 to - 0.06 (770H).

²⁹Si-NMR: δ(ppm): -2.7, -13.0, -19.5, -19.8 to -20.6.

### <Synthesis Example 4: n=34, R¹=n-butyl, R²=methyl>

A 1L four-neck flask equipped with a stirring rod, a thermometer, and a reflux condenser was charged with 9.4 g of 2,4,6-trimethyl-2,4,6-trivinylcyclotrisiloxane and 84.9 g of toluene at room temperature, and then 29.2 g of 2.6 mol/L n-butyllithium was added and stirred for 1 hour. 200.1 g of hexamethylcyclotrisiloxane and 234.3 g of toluene were added to the flask, and 29.7 g of N,N-dimethylformamide was added at 10°C and allowed to react for 2.5 hours. The polymerization was terminated by adding 13.7 g of acetic acid at 10°C, and stirring was further continued for additional 17 hours.

At room temperature, 150 g of water was added to the flask and stirred for 15 minutes. The mixture was then transferred to a separatory funnel and allowed to stand. After confirming that the mixture had separated into two layers, the lower water layer was extracted from the separatory funnel. The operation of further washing the upper layer with water (150 g) was repeated 8 times. The organic layer remaining in the separatory funnel was transferred to a 500 mL four-neck flask equipped with a stirring rod, a thermometer, a collection flask, and a distillation head. By using a vacuum pump under a reduced pressure condition, the mixture was heated stepwise to 100°C to remove volatile substances remaining in the product, thereby obtaining 181.3 g of a yellow transparent liquid.

GPC: Number average molecular weight (Mn)=3100, Weight average molecular weight (Mw)=3600, Molecular weight distribution (Mw/Mn)=1.15.

¹H-NMR: δ(ppm); 6.16 to 5.68 (3H), 2.26 (1H), 1.36 to 1.28 (6H), 0.88 (4H), 0.60 (2H), 0.20 to - 0.05 (206H).

²⁹Si-NMR: δ(ppm): -2.7, -13.0, -19.5, -19.8 to -20.6.

### <<Production of the derivative>>

<Synthesis Example 5> (Synthesis of the organopolysiloxane derivative expressed by formula (2)) In a 300 mL four-neck flask equipped with a stirring rod, a thermometer, and a reflux condenser, 62.0 g of the organopolysiloxane compound expressed by formula (1) and obtained in Synthesis Example 1, 33.4 g of tetraethoxysilane, and 0.3 g of 2-amino-2-methylpropane were added at room temperature. The mixture was heated to 35°C and stirred for 6 hours. The obtained reaction solution was heated stepwise to 140°C under a reduced pressure condition using a vacuum pump to remove the volatile substances remaining in the product, thus acquiring 57.0 g of a yellow transparent liquid.

GPC: Number average molecular weight (Mn)=4100, Weight average molecular weight (Mw)=4900, Molecular weight distribution (Mw/Mn)=1.19.

¹H-NMR: δ(ppm); 6.14 to 5.71 (3H), 3.87 to 3.78 (6H), 1.33 to 1.26 (6H), 1.22 (9H), 0.88 (4H), 0.60 (2H), 0.19 to -0.07 (260H).

²⁹Si-NMR: δ(ppm): -2.8, -19.4 to -21.0, -87.1.

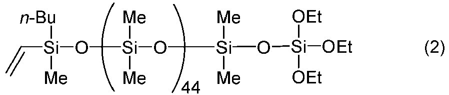

### <Synthesis Example 6> (Synthesis of the organopolysiloxane derivative expressed by formula (3))

In a 100 mL four-neck flask equipped with a stirring rod, a thermometer, and a reflux condenser, 10.0 g of the organopolysiloxane compound expressed by formula (1) and obtained in Synthesis Example 1, 9.0 g of toluene, and 1.0 g of N,N-dimethylformamide were added at room temperature and cooled in an ice bath while stirring. At 10°C or below, 0.5 g of triethylamine and 1.0 g of 3-(chlorodimethylsilyl)propyl methacrylate were added, and the mixture was further stirred at room temperature for 16 hours.

At room temperature, 10 g of water was added to the flask and stirred for 15 minutes. The mixture was then transferred to a separatory funnel and allowed to stand. After confirming that the mixture had separated into two layers, the lower water layer was extracted from the separatory funnel. The operation of further washing the upper layer with water (20 g) was repeated 5 times. The obtained organic layer was heated stepwise to 140°C, and the volatile substances were removed, thus acquiring 8.4 g of a yellow transparent liquid.

GPC: Number average molecular weight (Mn)=4400, Weight average molecular weight (Mw)=4800, Molecular weight distribution (Mw/Mn)=1.10.

¹H-NMR: δ(ppm); 6.14 to 5.54 (5H), 4.10 (2H), 1.95 (3H), 1.71 to 1.67 (2H), 1.36 to 1.28 (6H), 0.88 (4H), 0.62 to 0.51(4H), 0.28 to -0.10(242H).

²⁹Si-NMR: δ(ppm): 9.3, -2.2, -19.6 to -20.6.

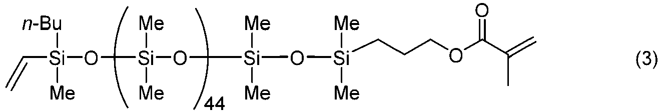

### <Synthesis Example 7> (Synthesis of the organopolysiloxane derivative expressed by formula (4))

In a 100 mL four-neck flask equipped with a stirring rod, a thermometer, and a reflux condenser, 30.0 g of the organopolysiloxane compound expressed by formula (1) obtained in Synthesis Example 4 and 1.2 g of dimethoxymethylsilane were added. While stirring at room temperature, 3.0 µL of platinum complex of divinyltetramethyldisiloxane was added, and the mixture was further stirred at room temperature for 20 hours.

A pale yellow transparent liquid of 26.6 g was obtained by removing volatile substances from the resulting organic layer.

GPC: Number average molecular weight (Mn)=3500, Weight average molecular weight (Mw)=3800, Molecular weight distribution (Mw/Mn)=1.10.

¹H-NMR: δ(ppm); 3.51 (6H), 1.83 (br), 1.38 to 1.24 (6H), 0.88 (4H), 0.67 to 0.42 (6H), 0.19 to - 0.07 (206H)

²⁹Si-NMR: δ(ppm): 10.3, -0.6, -12.8, -19.6 to -20.6

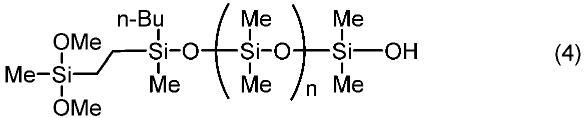

### [Industrial applicability]

The organopolysiloxane compound having different functional groups at both ends and the organopolysiloxane derivative having different functional groups at both ends of the invention are materials that can be used as raw materials for curable silicone rubber compositions in building materials, daily necessities, medical devices, electronic materials and others. By using the compound or the derivative as an additive to organic resins, the organopolysiloxane compound and the organopolysiloxane derivative are materials that can be utilized to impart excellent properties to organic resins such as flexibility, water repellency, release properties, weather resistance, heat resistance, and electrical insulation, which are derived from the structure of the organopolysiloxane compound.

## Claims

1. An organopolysiloxane compound, represented by formula (1) as follows: 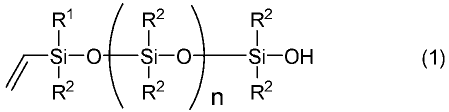 (wherein in formula (1), R¹ represents an alkyl group having 4 or more carbon atoms, each R² independently represents an alkyl group or an aryl group, and n represents 0 or an integer of 1 or more.)

2. The organopolysiloxane compound as claimed in claim 1, wherein a molecular weight distribution (Mw/Mn) is 1.80 or less.

3. A method for producing the organopolysiloxane compound as claimed in claim 1 or 2, the method comprising: a step of reacting an alkyl lithium compound with trivinyltrimethylcyclotrisiloxane to generate lithium vinylalkylmethylsilanolate; then, a step of reacting with cyclotrisiloxane; and a step of terminating reaction with an acid.

4. An organopolysiloxane derivative derived from the organopolysiloxane compound as claimed in claim 1 or 2, wherein the organopolysiloxane derivative has different functional groups at both ends.

5. A method for producing an organopolysiloxane derivative having different functional groups at both ends by using, as a raw material or a reaction intermediate, the organopolysiloxane compound as claimed in claim 1 or 2.

6. An organopolysiloxane derivative having different functional groups at both ends and obtained by reacting the organopolysiloxane compound as claimed in claim 1 or 2 with a silane compound having an alkoxysilyl group, a chloro group, or a silanol group.

7. A method for producing an organopolysiloxane derivative having different functional groups at both ends and obtained by reacting the organopolysiloxane compound as claimed in claim 1 or 2 with a silane compound having an alkoxysilyl group, a chloro group, or a silanol group.
